# EUROPEAN PATENT APPLICATION

(11) **EP 4 768 896 A1**
(43) Date of publication of application: **01.07.2026**
(21) Application number: 24886320.1
(22) Date of filing: 31.10.2024
(51) Int. Cl.: G01N 21/88, G01N 21/89, G01N 21/892, G01N 21/94

(54) **APPARATUS AND METHOD FOR DETECTING AND ANALYZING FOREIGN SUBSTANCES IN CATHODE**

(30) Priority: 02.11.2023 KR 20230149852
(71) Applicant: LG Chem, Ltd., Seoul 07336 (KR)
(72) Inventor: SONG, Han Sung, Daejeon 34122 (KR); BAE, Sung Hak, Daejeon 34122 (KR); CHOI, Ik Jin, Daejeon 34122 (KR); NHO, Hyun Woo, Daejeon 34122 (KR); NAM, Gyeong Hyeon, Daejeon 34122 (KR); LEE, Min Young, Daejeon 34122 (KR); KIM, Dong Ju, Daejeon 34122 (KR); LEE, Yoh Hann, Daejeon 34122 (KR)
(74) Representative: Hoffmann Eitle
(86) International application number: PCT/KR2024/016968
(87) International publication number: WO 2025/095648

(57) **Abstract**

The present disclosure relates to an apparatus and method for detecting and analyzing a foreign substance in a cathode, the apparatus including: a first camera for dividing a cathode being transported in one direction into predetermined areas and photographing the predetermined areas; an image processing processor for processing images of the predetermined areas photographed by the first camera to specify a location where a foreign substance is formed; a second camera for photographing the foreign substance specified by the image processing processor; and a spectrum processing processor for analyzing a spectrum signal of the image of the foreign substance photographed by the second camera to classify the composition of the foreign substance.

## Description

The present disclosure claims the benefit of the filing date of Korean Patent Application No. 10-2023-0149852, filed with the Korean Intellectual Property Office on November 2, 2023, the entire contents of which are incorporated herein by reference.

### [Technical Field]

The present disclosure relates to an apparatus and method for detecting and analyzing a foreign substance in a cathode, and more specifically, to an apparatus and method for detecting and analyzing a foreign substance in a cathode, which can photograph a predetermined section of a cathode being transported in one direction with a vision camera to specify the location of a foreign substance, and then photograph the foreign substance with a hyperspectral imaging camera to classify the composition of the foreign substance.

### [Background Art]

Among the elements constituting a secondary battery, a cathode, along with an anode, is one of the important elements that determine the battery's capacity, lifespan, and charging speed. Materials used for the cathode include lithium cobalt oxide (LCO), lithium nickel manganese oxide (NCM), lithium iron phosphate (LFP), and the like.

Such a cathode determines the capacity and average voltage of the battery. Therefore, various types of fine foreign substances mixed in during the cathode manufacturing process may significantly affect the quality of the manufactured battery cells, such as low voltage.

Ultimately, inductively coupled plasma mass spectrometry (ICP-MS), laser induced breakdown spectrum (LIBS) microscope, micro-XRF, general vision inspection method, etc. are used to detect foreign substances mixed into the cathode and analyze their composition.

The ICP-MS requires a pretreatment process to analyze a sample, which has the disadvantage of being complicated and requiring the use of a separate solvent. The LIBS microscopy is a technology that uses a microscope to scan a specific area, burns a part recognized as a foreign substance with a laser, and then observes the spectrum of the plasma. However, it has the disadvantage of destroying a portion of the sample and being difficult to use the sample in large quantities. The Micro-XRF is a technology that analyzes the composition of a foreign substance by checking the X-ray reaction spectrum of a particle, but has the disadvantage that movement and photography for mapping take a long time. The general vision inspection method has the problem of making it difficult to distinguish the composition of foreign substances because particles are required to be distinguished solely by the color of visible light.

The background technology described above is technical information possessed by the inventors for the purpose of deriving embodiments of the present disclosure or acquired during the derivation process, but cannot necessarily be said to be publicly known technology disclosed to the general public prior to the filing of the embodiments of the present disclosure.

### [Disclosure]

### [Technical Problem]

In order to solve the above problems, the present disclosure provides an apparatus and method for detecting and analyzing a foreign substance in a cathode, which can photograph a predetermined section of a cathode being transported in one direction with a vision camera to specify the location of a foreign substance, and then photograph the foreign substance with a hyperspectral imaging camera to classify the composition of the foreign substance.

### [Technical Solution]

According to an embodiment of the present disclosure, an apparatus for detecting and analyzing a foreign substance in a cathode may include: a first camera for dividing a cathode being transported in one direction into predetermined areas and photographing the predetermined areas; an image processing processor for processing images of the predetermined areas photographed by the first camera to specify a location where a foreign substance is formed; a second camera for photographing the foreign substance specified by the image processing processor; and a spectrum processing processor for analyzing a spectrum signal of the image of the foreign substance photographed by the second camera to classify the composition of the foreign substance.

In particular, the first camera may be a vision camera.

In addition, the apparatus may further include a first light source for irradiating light within a wavelength band photographable by the vision camera toward the predetermined areas of the cathode.

Meanwhile, the second camera may be either a hyperspectral imaging camera or a multispectral imaging camera.

In addition, the apparatus may further include a second light source for irradiating light within a wavelength band that can be photographed by either the hyperspectral imaging camera or the multispectral imaging camera toward the foreign substance.

Meanwhile, the apparatus may further include a first transport module for moving the second camera to a location where the foreign substance in the predetermined area can be photographed when the location of the foreign substance is specified by the image processing processor.

In particular, the first transport module may move the second camera in a width direction of the cathode which has a predetermined width direction size and is extended and transported in a length direction.

In addition, the apparatus may further include a data processing processor for receiving data on the location of the foreign substance specified by the image processing processor and data on the speed at which the cathode is transported, and controlling the second camera to photograph the foreign substance when the foreign substance is at a location where the second camera can photograph the foreign substance.

Meanwhile, the apparatus may further include a second transport module for moving the cathode where the foreign substance is located to a location where the second camera can photograph the cathode when the location of the foreign substance is specified by the image processing processor.

According to an embodiment of the present disclosure, a method for detecting and analyzing a foreign substance in a cathode may include the steps of: dividing a cathode being transported in one direction into predetermined areas and photographing the predetermined areas with a first camera; processing images of the predetermined areas photographed by the first camera to specify a location where a foreign substance is formed; photographing the specified foreign substance with a second camera; and analyzing a spectrum signal of the image of the foreign substance photographed by the second camera to classify the composition of the foreign substance.

In particular, in the step of photographing with the first camera, the first camera may be a vision camera.

In addition, the method may further include a step of irradiating light within a wavelength band that can be photographed by the vision camera toward the predetermined areas of the cathode when photographing the predetermined areas with the vision camera.

Additionally, in the step of photographing with the second camera, the second camera may be either a hyperspectral imaging camera or a multispectral imaging camera.

In addition, the method may further include a step of irradiating light within a wavelength band that can be photographed by either the hyperspectral imaging camera or the multispectral imaging camera toward the foreign substance when photographing the foreign substance with either the hyperspectral imaging camera or the multispectral imaging camera.

Meanwhile, the method may further include a step of moving the second camera to a location where the foreign substance in a specific predetermined area can be photographed.

Here, the method may further include a step of receiving data on the location of the specific predetermined area and data on the speed at which the cathode is transported, and controlling the second camera to photograph the foreign substance when the foreign substance is transported to a location where the second camera can photograph the foreign substance.

Alternatively, the method may further include a step of moving the cathode where the foreign substance is located to a location where the second camera can photograph the cathode in order to photograph a specific foreign substance.

### [Advantageous Effects]

The apparatus for detecting and analyzing a foreign substance in a cathode according to an embodiment of the present disclosure has the advantage of enabling rapid and accurate quality control by analyzing and classifying fine foreign substances formed in the cathode in real time.

Furthermore, additional research data on the process in which a foreign substance is mixed in the production line of cathodes can be obtained.

The effects obtainable in the disclosure are not limited to the effects mentioned above, and other effects not mentioned will be clearly understood by those skilled in the art to which the present disclosure belongs from the following description.

### [Description of Drawings]

FIG. 1 illustrates a perspective view of an apparatus for detecting and analyzing a foreign substance in a cathode according to an embodiment of the present disclosure.
FIG. 2 illustrates a block diagram of an apparatus for detecting and analyzing a foreign substance in a cathode according to an embodiment of the present disclosure.
FIG. 3 is a perspective view illustrating a movement of a second camera in an apparatus for detecting and analyzing a foreign substance in a cathode according to an embodiment of the present disclosure.
FIG. 4 is a perspective view illustrating a movement of a cathode having a foreign substance formed therein in an apparatus for detecting and analyzing a foreign substance in a cathode according to an embodiment of the present disclosure.
FIG. 5 illustrates an image of a predetermined area photographed by a first camera in an apparatus for detecting and analyzing a foreign substance in a cathode according to an embodiment of the present disclosure.
FIG. 6 illustrates an image of a foreign substance photographed by a second camera in an apparatus for detecting and analyzing a foreign substance in a cathode according to an embodiment of the present disclosure.
FIG. 7 illustrates a spectrum signal of a foreign substance in an apparatus for detecting and analyzing a foreign substance in a cathode according to an embodiment of the present disclosure.
FIG. 8 illustrates a flowchart of a method for detecting and analyzing a foreign substance in a cathode according to an embodiment of the present disclosure.

### [Description of Reference Numerals and Symbols]

1: Apparatus for detecting and analyzing a foreign substance in a cathode
10: First camera
20: Second camera
30: Image processing processor
40: Spectrum processing processor
50: Data processing processor
60: First light source
70: Second light source
80: First transport module
90: Second transport module
A: FOV of first camera
B: FOV of second camera
C: Cathode

### [Best Mode]

The present disclosure will become clear with reference to embodiments described in detail below together with the accompanying drawings. However, the present disclosure is not limited to the embodiments described below and may be implemented in various different forms. These embodiments are provided only to make the disclosure of the present disclosure complete and to fully inform those skilled in the art of the scope of the disclosure. The present disclosure is defined only by the scope of the claims. Meanwhile, the terms used in the specification are for describing embodiments and are not intended to limit the present disclosure.

Throughout the specification, singular forms also include plural forms, unless specifically stated otherwise in the context.

As used throughout the specification, the terms "comprises" and/or "comprising" means that the presence or addition of one or more other components, steps, operations and/or devices in addition to the mentioned components, steps, operations and/or devices is not excluded, and other components may be further included, rather than excluding other components, unless specifically stated to the contrary.

Throughout the specification, terms such as "first" or "second" may be used simply to distinguish one component from another component and do not limit the components in any other respect (e.g., importance or order).

In addition, the term "...part/unit" described throughout the specification refers to a unit that processes at least one function or operation, which may be implemented as hardware, software, or a combination of hardware and software.

In addition, throughout the specification, when it is said that a part is "connected" to another part, this includes not only cases where they are "directly connected," but also cases where they are "indirectly connected" with another component interposed therebetween.

Hereinafter, the present disclosure will be described in more detail.

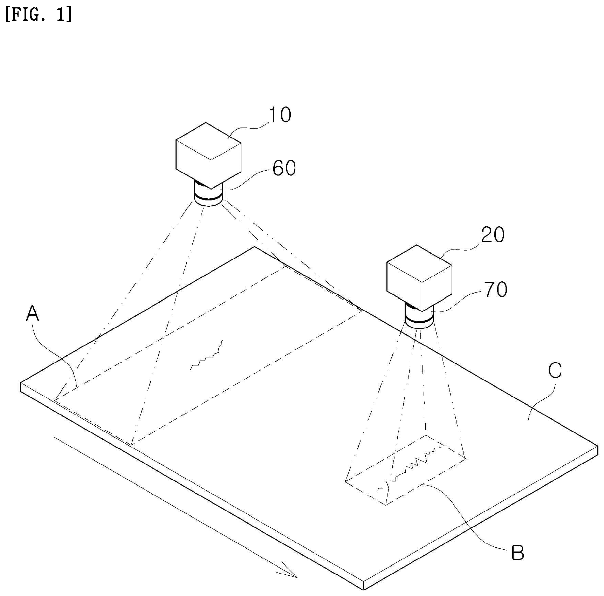

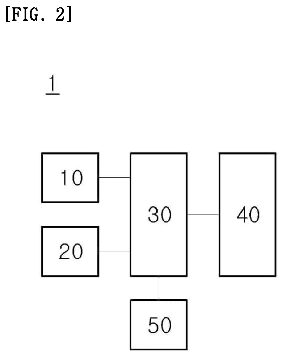

FIG. 1 illustrates a perspective view of an apparatus 1 for detecting and analyzing a foreign substance in a cathode according to an embodiment of the present disclosure, and FIG. 2 illustrates a block diagram of an apparatus 1 for detecting and analyzing a foreign substance in a cathode according to an embodiment of the present disclosure.

Referring to FIGS. 1 and 2, the apparatus 1 for detecting and analyzing a foreign substance in a cathode according to an embodiment of the present disclosure may include a first camera 10, an image processing processor 30, a second camera 20, and a spectrum processing processor 40.

The first camera 10 is configured to photograph a cathode (C) being transported in one direction, and may be configured to be installed at a predetermined distance from one surface, particularly an upper surface, of the cathode (C) and to photograph one surface of the cathode (C).

In particular, the cathode (C) may be formed to have a predetermined width direction size and length direction size, and may be extended in the length direction and transported in one direction. Here, the first camera 10 divides the cathode (C) into predetermined areas that are portions of the longitudinal direction thereof and photographs predetermined the areas. Here, the 'predetermined area' is an area within the FOV (A) range of the first camera 10, and the size of the predetermined area may be the entire width of the cathode (C) in the width direction and a portion of the length direction corresponding thereto. Alternatively, the cathode (C) may be divided into parts in the width direction and photographed by a plurality of first cameras 10. This may be determined depending on the sizes of the cathode (C) in the width direction and the length direction.

In particular, the first camera 10 may be a vision camera. The vision camera is a type of high-performance camera, and may be, for example, a GigE camera, a CameraLink camera, or a CoaXpress camera.

Ultimately, the first camera 10 divides the cathode (C), which is transported in one direction, into predetermined areas and repeatedly photographs the predetermined areas, and the photographed images may be transmitted to the image processing processor 30.

The image processing processor 30 is a central processing unit that determines a location of a foreign substance existing on the cathode (C), and may receive the image of the predetermined area photographed by the first camera 10 and specify the location where the foreign substance is formed. The image photographed by the first camera 10 may be converted into electrical energy through a CMOS image sensor and into a digital signal through an analog to digital converter (ADC). In the process, a location where a signal having a signal value equal to or greater than a set signal value is introduced may be specified as the location of the foreign substance.

In particular, referring to FIGS. 1 and 2, when the first camera 10 is a vision camera, a first light source 60 for irradiating light within a wavelength band that can be photographed by the vision camera may be further included. In general, the vision camera is a camera that can capture images in the visible light range, and when particles have the same color, it is difficult to distinguish them, and there may be an error due to brightness. Therefore, in order to more effectively specify the location of a foreign substance, it is preferable to irradiate light within the wavelength band of visible light and capture the image. To this end, the first light source 60 may directly irradiate light toward a predetermined area photographed by the first camera 10, or may illuminate the predetermined area through indirect light. Additionally, the first light source 60 may be mounted in the same casing as the first camera 10, or may be installed in a separate casing.

Meanwhile, although the location of the foreign substance may be specified through the first camera 10, especially the vision camera, it is somewhat difficult to determine the type, composition, etc. of the foreign substance. The vision camera can photograph a rather wide range due to the wide FOV (A), but it is difficult to distinguish the types of foreign substances.

Therefore, it is necessary to photograph the foreign substance specified in the image processing processor 30 using a second camera 20, which is a separate camera.

However, since the second camera 20 has a smaller FOV (B) than the FOV (A) of the first camera 10, an area that can be photographed is somewhat narrow. Therefore, when the location of the foreign substance is specified, the second camera 20 needs to move to that location and capture the image. In an embodiment, the second camera 20 may be either a hyperspectral imaging camera or a multispectral imaging camera.

In particular, the second camera 20 may be a hyperspectral imaging camera (HSI) or a multispectral imaging camera (Multi-Band Camera). The hyperspectral imaging camera is characterized by its ability to photograph a wide range of wavelengths, extending beyond the visible light wavelength range. Additionally, a hyperspectral image photographed by the hyperspectral imaging camera has the advantage of being able to obtain three-dimensional information composed of two spatial dimensions and one spectral size.

The multispectral imaging camera is characterized by its ability to capture an image in visible, near-infrared, and infrared wavelength ranges. The principles of the multispectral imaging camera and hyperspectral imaging camera are the same, but the hyperspectral imaging camera has the characteristics of being able to have a higher radiation resolution and a finer spectrum.

Therefore, it is preferable to use a hyperspectral imaging camera when signal differences on the continuous spectra are sensitive according to the characteristics of the foreign substance, and a multispectral imaging camera when signal differences are not significant and faster processing and analysis is desired.

Ultimately, the second camera 20 photographs only the foreign substance at a location where the foreign substance is specified in the predetermined area of the cathode (C) being transported in one direction, and the photographed image of the foreign substance may be transmitted to the spectrum processing processor 40.

The spectrum processing processor 40 is a central processing unit that analyzes the spectrum signal of the foreign substance, and may receive the image of the foreign substance photographed by the second camera 20 and classify the composition of the foreign substance. The image photographed by the second camera 20 has hundreds of continuous spectral bands of spectral wavelength ranges reflected from the foreign substance, thereby enabling the composition of the foreign substance to be identified. This wide electromagnetic spectral range allows for high wavelength resolution and the inclusion of a wide range of spatial spectral information.

In particular, when the second camera 20 is either a hyperspectral imaging camera or a multispectral imaging camera, a second light source 70 for irradiating light within a wavelength band that can be photographed by the camera may be further included. Unlike the vision camera, the hyperspectral imaging camera and the multispectral imaging camera can photograph light in a wavelength range wider than the visible light range, so it is desirable to capture images by irradiating light within a wavelength range that can be photographed. To this end, the second light source 70 may directly irradiate light toward the foreign substance photographed by the second camera 20, or may illuminate the foreign substance through indirect light. Additionally, the second light source 70 may be mounted in the same casing as the second camera 20, or may be installed in a separate casing.

Meanwhile, in order for the second camera 20 to photograph a foreign substance, the second camera 20 needs to be disposed at a location where the foreign substance is formed in the cathode (C). This is particularly important when the second camera 20 is either a hyperspectral imaging camera or a multispectral imaging camera, because the area that can be photographed by the camera is very small.

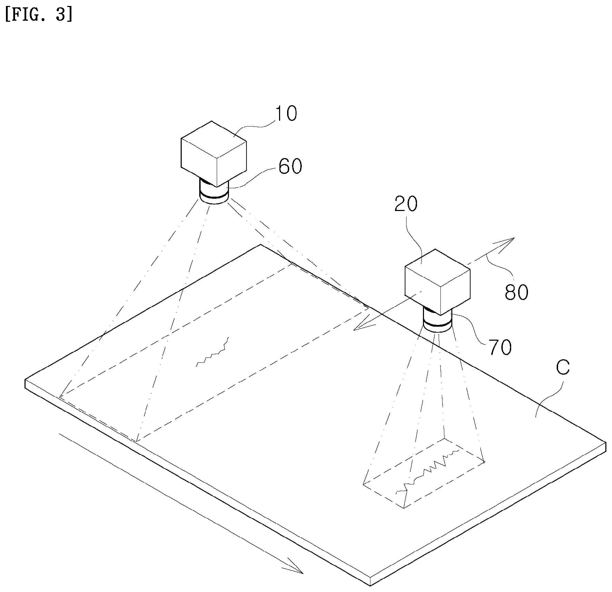

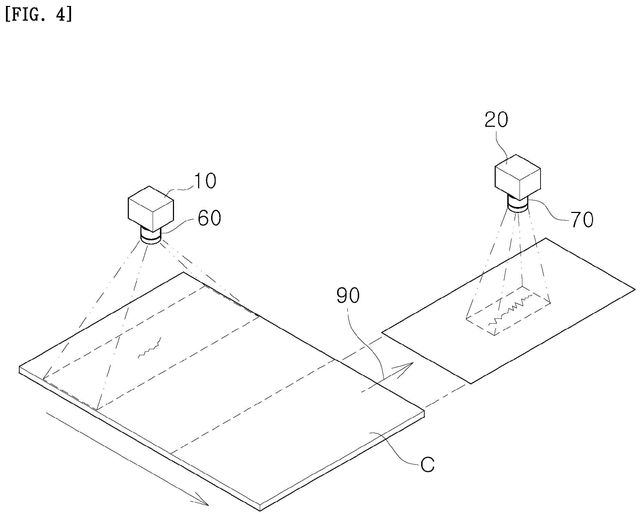

Therefore, the second camera 20 and/or the cathode (C) in which the foreign substance is formed need to move. FIG. 3 is a perspective view illustrating a movement of a second camera 20 in an apparatus 1 for detecting and analyzing a foreign substance in a cathode (C) according to an embodiment of the present disclosure, and FIG. 4 is a perspective view illustrating a movement of a cathode (C) having a foreign substance formed therein in an apparatus 1 for detecting and analyzing a foreign substance in a cathode (C) according to an embodiment of the present disclosure.

Referring to FIG. 3, a first transport module 80 for moving the second camera 20 to a location where the foreign substance in the predetermined area can be photographed may be further included. Alternatively, referring to FIG. 4, a second transport module 90 for moving the cathode (C) in the predetermined area to a location where it can be photographed by the second camera 20 may be further included.

In an embodiment, the first transport module 80 may move in the width direction and/or length direction of the cathode (C).

In particular, when the first transport module 80 may move in the width direction of the cathode (C), the cathode (C) having a predetermined width direction size and length direction size is transported in the length direction, so that the second camera 20 can capture an image of the foreign substance by moving in the width direction of the cathode (C) and then capturing the image when the foreign substance is located in the direction toward which the second camera 20 faces.

Here, it is necessary to consider the speed at which the cathode (C) is transported. That is, when the location of the foreign substance is specified among the predetermined area photographed by the first camera 10, since the cathode (C) is continuously moving in the length direction, the foreign substance needs to be photographed at the moment it is located in the FOV (B) of the second camera 20.

The location of the second camera 20 may be moved through the data processing processor 50. More specifically, by coordinating the foreign substance specified by the image processing processor 30 through the location data thereof, receiving data on the speed at which the cathode (C) is transported, and considering a change in the location of the coordinates, it is possible to control the second camera 20 to photograph the foreign substance when it is transported to a location where the second camera 20 can photograph the foreign substance.

The second transport module 90 is configured to move the cathode (C) containing the foreign substance to the location where the second camera 20 is located. This is a device that facilitates collecting a sample of the cathode (C) containing the foreign substance, and when the location where the foreign substance is formed is specified by processing the image of the predetermined area photographed by the first camera 10, may transport the cathode (C) containing the foreign substance in a direction other than one direction. In an embodiment, the other direction is a direction forming a predetermined angle with the one direction, preferably a perpendicular direction, and the cathode (C) may be separated in that direction. A portion of the separated cathode (C) where the foreign substance is located may be photographed by the second camera 20.

Hereinafter, the results of spectral analysis through the foreign substance location detection image captured by the first camera 10 and the foreign substance image captured by the second camera 20 of the apparatus 1 for detecting and analyzing a foreign substance in a cathode according to an embodiment of the present disclosure are described.

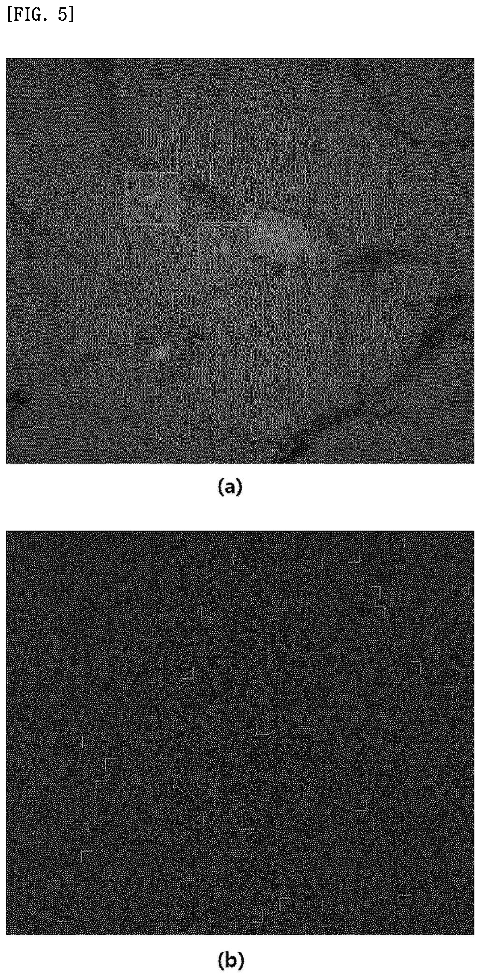

FIG. 5 illustrates an image of a predetermined area photographed by a vision camera, which is the first camera 10, in the apparatus 1 for detecting and analyzing a foreign substance in a cathode according to an embodiment of the present disclosure. When a predetermined area of the cathode (C) being transported in one direction is photographed and image-processed, if a foreign substance exists in the cathode (C), the foreign substance can be detected as shown in FIG. 5. The location of the detected foreign substance is specified and the location data is transmitted to a data processing processor 50, and data on the speed at which the cathode (C) is transported in one direction is also transmitted to the data processing processor 50. Upon receiving the data, the data processing processor 50 moves a hyperspectral imaging camera, which is the second camera 20, and photographs the foreign substance with the hyperspectral imaging camera.

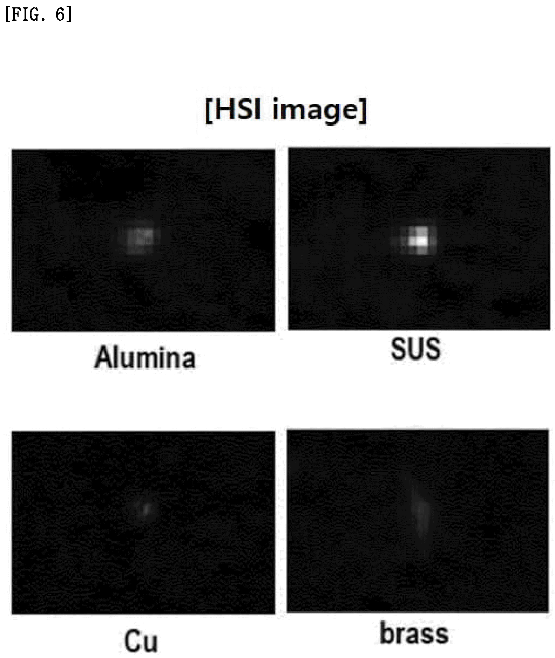

FIG. 6 illustrates an image of the foreign substance photographed by the hyperspectral imaging camera, which is the second camera 20, in the apparatus 1 for detecting and analyzing a foreign substance in a cathode according to an embodiment of the present disclosure. When the foreign substance in the cathode (C) is photographed by the hyperspectral imaging camera, it can be identified as shown in FIG. 6. However, in order to analyze the composition of the foreign substance, the spectral signal of the foreign substance image needs to be analyzed.

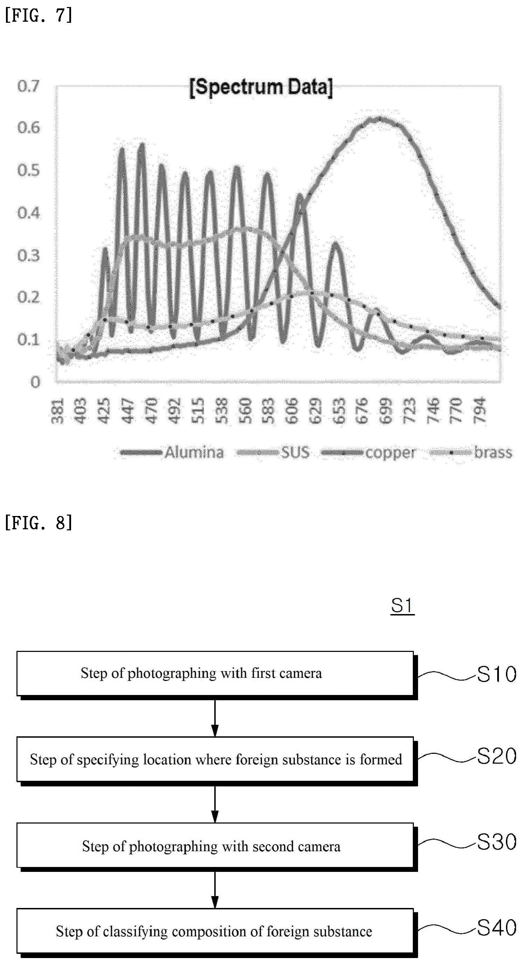

FIG. 7 illustrates a spectrum signal of a foreign substance in the apparatus 1 for detecting and analyzing a foreign substance in a cathode according to an embodiment of the present disclosure. Foreign substances exhibit different spectral sizes according to predetermined wavelengths depending on their type. For example, it can be seen that in the case of aluminum, the width and wavelength of the spectrum vary greatly at wavelengths of 425 or more and 676 or less, in the case of stainless steel (SUS), the spectral width is maintained gently at wavelengths of 447 or more and 583 or less, in the case of copper, the spectral width increases significantly at a wavelength of 699, and in the case of brass, the spectral width does not change significantly.

Ultimately, by identifying the location of the foreign substance through the vision camera and analyzing the spectrum signal of the foreign substance photographed through the hyperspectral imaging camera, the location and composition of the foreign substance present on the cathode (C) can be more effectively analyzed.

Meanwhile, a method (S1) for detecting and analyzing a foreign substance in a cathode according to an embodiment of the present disclosure may include the steps of: (S10) dividing a cathode (C) being transported in one direction into predetermined areas and photographing the predetermined areas with a first camera 10; (S20) processing images of the predetermined areas photographed by the first camera 10 to specify a location where a foreign substance is formed; (S30) photographing the specified foreign substance with a second camera 20; and (S40) analyzing a spectrum signal of the image of the foreign substance photographed by the second camera 20 to classify the composition of the foreign substance.

The step (S10) of photographing with the first camera 10 is a step of photographing the cathode (C) being transported in one direction. Here, the 'predetermined area' may be an area within the FOV range (A) of the first camera 10. Additionally, the first camera 10 may be a vision camera.

The method may further include a step of irradiating light within a wavelength band that can be photographed by the vision camera toward the predetermined area of the cathode when photographing the predetermined areas of the cathode (C) with the first camera 10. This is a step to more easily find foreign substances formed in the predetermined area.

The step (S20) of specifying the location of the foreign substance is a step of specifying the location of the foreign substance on the cathode (C) by processing the image of the predetermined area photographed by the first camera 10. Since the FOV (B) of the second camera 20 is smaller than the FOV (A) of the first camera 10, it is necessary to more specifically specify the location of the foreign substance.

When the location of the foreign substance is specified, a step of moving the second camera 20 to a location where the foreign substance in the specified predetermined area can be photographed may be further included. Alternatively, a step of moving the cathode (C) in which the foreign substance is located to a location where it can be photographed by the second camera 20 may be further included.

The step (S30) of photographing with the second camera 20 is a step of photographing the foreign substance with the second camera 20 when the location of the foreign substance is specified. The location of the foreign substance may be formed within the FOV (B) range of the second camera 20. In addition, the second camera 20 may be either a hyperspectral imaging camera or a multispectral imaging camera.

The method may further include a step of irradiating light within a wavelength band that can be photographed by either the hyperspectral imaging camera or the multispectral imaging camera toward the foreign substance when photographing the foreign substance with the second camera 20. This is a step to more easily classify the composition of the foreign substances.

In particular, when photographing the foreign substance with the second camera 20, the method may further include a step of receiving data on the location of the specific predetermined area and data on the speed at which the cathode is transported, and controlling the second camera to photograph the foreign substance when the foreign substance is transported to a location where the second camera can photograph the foreign substance.

The step (S40) of classifying the composition of the foreign substance is a step of classifying the composition of the foreign substance by analyzing the spectrum signal of the image of the foreign substance photographed by the second camera 20.

The method (S1) for detecting and analyzing a foreign substance in a cathode according to an embodiment of the present disclosure may include all technical features and contents of the apparatus 1 for detecting and analyzing a foreign substance in a cathode according to an embodiment of the present disclosure as described above.

Although the present disclosure has been described above by way of limited embodiments, the present disclosure is not limited thereto, and it is obvious that various modifications and variations can be made within the technical idea of the present disclosure and the equivalent scope of the claims to be described below by a person having ordinary skill in the art to which the present disclosure pertains.

## Claims

1. An apparatus for detecting and analyzing a foreign substance in a cathode, the apparatus comprising:
a first camera for dividing a cathode being transported in one direction into predetermined areas and photographing the areas;
an image processing processor for processing images of the predetermined areas photographed by the first camera to specify a location where a foreign substance is formed;
a second camera for photographing the foreign substance specified by the image processing processor; and
a spectrum processing processor for analyzing a spectrum signal of the image of the foreign substance photographed by the second camera to classify the composition of the foreign substance.

2. The apparatus of claim 1, wherein the first camera is a vision camera.

3. The apparatus of claim 2, further comprising a first light source for irradiating light within a wavelength band photographable by the vision camera toward the predetermined area of the cathode.

4. The apparatus of claim 1, wherein the second camera is either a hyperspectral imaging camera or a multispectral imaging camera.

5. The apparatus of claim 4, further comprising a second light source for irradiating light within a wavelength band photographable by either the hyperspectral imaging camera or the multispectral imaging camera toward the foreign substance.

6. The apparatus of claim 1, further comprising a first transport module for moving the second camera to a location where the foreign substance in the predetermined area is photographable when the location of the foreign substance is specified by the image processing processor.

7. The apparatus of claim 6, wherein the first transport module moves the second camera in a width direction of the cathode which has a predetermined width direction size and is extended and transported in a length direction.

8. The apparatus of claim 6 or 7, further comprising a data processing processor for receiving data on the location of the foreign substance specified by the image processing processor and data on the speed at which the cathode is transported, and controlling the second camera to photograph the foreign substance when the foreign substance is at a location where the foreign substance is photographable by the second camera.

9. The apparatus of claim 1, further comprising a second transport module for moving the cathode where the foreign substance is located to a location where the cathode is photographable by the second camera when the location of the foreign substance is specified by the image processing processor.

10. A method for detecting and analyzing a foreign substance in a cathode, the method comprising the steps of:
dividing a cathode being transported in one direction into predetermined areas and photographing the areas with a first camera;
processing images of the predetermined areas photographed by the first camera to specify a location where a foreign substance is formed;
photographing the specified foreign substance with a second camera; and
analyzing a spectrum signal of the image of the foreign substance photographed by the second camera to classify the composition of the foreign substance.

11. The method of claim 10, wherein in the step of photographing with the first camera, the first camera is a vision camera.

12. The method of claim 11, further comprising a step of irradiating light within a wavelength band photographable by the vision camera toward the predetermined area of the cathode when photographing the predetermined areas with the vision camera.

13. The method of claim 10, wherein in the step of photographing with the second camera, the second camera is either a hyperspectral imaging camera or a multispectral imaging camera.

14. The method of claim 13, further comprising a step of irradiating light within a wavelength band photographable by either the hyperspectral imaging camera or the multispectral imaging camera toward the foreign substance when photographing the foreign substance with either the hyperspectral imaging camera or the multispectral imaging camera.

15. The method of claim 10, further comprising a step of moving the second camera to a location where the foreign substance in the specific predetermined area is photographable.

16. The method of claim 15, further comprising a step of receiving data on the location of the specific predetermined area and data on the speed at which the cathode is transported, and controlling the second camera to photograph the foreign substance when the foreign substance is transported to a location where the foreign substance is photographable by the second camera.

17. The method of claim 10, further comprising a step of moving the cathode where the foreign substance is located to a location where the cathode is photographable by the second camera in order to photograph the specific foreign substance.
